Europäisches Patentamt

European Patent Office

Office européen des brevets

(19)

(11) **EP 1 501 166 B1**

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(51) Int Cl.⁷: **H02H 1/00**, H02H 3/12, B60L 3/00

(21) Anmeldenummer: **03291825.2**

(22) Anmeldetag: **24.07.2003**

(54) **Schaltungsanordnung zur Uberprüfung der Versorgung einer elektrischen Last und Verfahren hierfür**

Circuit arrangment for checking the supply of an electrical load, and method therefor

Circuit pour surveiller l'alimentation d'une charge électrique, et méthode correspondant

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(43) Veröffentlichungstag der Anmeldung:
**26.01.2005 Patentblatt 2005/04**

(73) Patentinhaber: **ALCATEL**
**75008 Paris (FR)**

(72) Erfinder:
• **Gebert, Thomas**
**74626 Bretzfeld (DE)**

• **Lauterberg , Veit, Dr.**
**70736 Fellbach-Oeffingen (DE)**

(74) Vertreter: **Rausch, Gabriele**
**Alcatel**
**Intellectual Property Department, Stuttgart**
**70430 Stuttgart (DE)**

(56) Entgegenhaltungen:
**DE-A- 3 801 776       DE-C- 19 538 368**
**GB-A- 1 151 336       US-A- 4 161 760**

## Beschreibung

Die Erfindung betrifft eine Schaltungsanordnung nach dem Oberbegriff des Anspruchs 1 und ein Verfahren nach dem Oberbegriff des Anspruchs 10 hierfür.

Strom- und Spannungsüberwachungen zur Überwachung und Schutz elektrischer Energieversorgungen und/oder zum Schutz der an die Energieversorgung angeschlossenen Last werden vielfältig eingesetzt. Im einfachsten Fall weist die Energieversorgung eine Eingangs- oder Ausgangssicherung auf, welche den maximalen Strom begrenzt. Bei Überschreiten trennt diese Sicherung den entsprechenden Stromkreis, z. B. durch Schmelzen eines Sicherungsfadens oder durch Betätigen eines Schalters.

In Sicherheitseinrichtungen ist es von größter Wichtigkeit, Fehlfunktionen zu erkennen und im Falle einer Erkennung einer möglichen Fehlfunktion eine Sicherheitsreaktion einzuleiten. Mögliche Ursachen von Fehlfunktionen können beispielsweise eine zu geringe oder zu hohe Versorgungsspannung einer Einrichtung sein oder eine fehlerhafte Stromaufnahme, z. B. eine zu geringe Stromentnahme bei einem Leiterbruch.

WO92/17830 beschreibt eine Schnittstelleneinheit, welche eine Überwachung sowohl der Spannung als auch des Stroms eines analogen Ausgangssignals bietet. Dazu werden Spannung und Strom jeweils einzeln mit vorgegebenen Spannungs- bzw. Stromwerten verglichen. Bei Abweichen über ein jeweils definiertes Maß wird jeweils ein Schalter zum Trennen des Signals vom Ausgang angesteuert.

DE 19 538 368 offenbart eine Schaltungsanordnung gemäß dem Oberbegriff des Anspruchs 1.

En Nachteil des oben beschriebenen Stands der Technik liegt in dem relativ hohen Aufwand der getrennten Überwachung von Spannung und Strom. Ein hoher Aufwand bedeutet gleichzeitig eine hohe Fehleranfälligkeit.

Der Erfindung liegt die Aufgabe zugrunde, eine einfache Schaltungsanordnung zu schaffen, welche dennoch eine genaue Strom und Spannungsüberwachung ermöglicht.

Erfindungsgemäß wird diese Aufgabe durch eine Schaltungsanordnung nach der Lehre des Anspruchs 1 und einem Verfahren nach der Lehre des Anspruchs 9 gelöst.

Grundgedanke der Erfindung ist es, die Prüfung der an einer Last anliegenden Eingangsspannung, d. h. im wesentlichen die Ausgangsspannung einer die Last versorgenden elektrischen Energieversorgung und die Prüfung des Laststromes zu kombinieren. Dazu wird eine Messspannung über einem an die Energieversorgung der Last angeschlossenen Spannungsteiler abgegriffen und einer Überwachungseinrichtung zugeführt wird. Der Spannungsteiler enthält ein schaltbares Element, wodurch zwei verschiedene Teilungsverhältnisse der Spannung eingestellt werden können. Der Laststrom wird abgegriffen, und bewertet; bei Erreichen eines vorbestimmten Stromwertes erfolgt ein Umschalten des schaltbaren Element und damit eine Änderung der Messspannung.

Das schaltbare Element kann ein mechanisches Relais darstellen, das dann, wenn ein bestimmter Stromwert in der Relaisspule erreicht wird, umschaltet. Vorteilhafterweise wird das schaltbare Element durch einen Schalttransistor realisiert. Dabei wird die Basis dieses Transistors über eine Koppelschaltung mit einer vom Laststrom abgeleiteten Spannung gekoppelt. Diese Spannung wird über einem Bauelement abgegriffen, welches in den Laststromkreis geschaltet ist. Dieses Element wird vorteilhafterweise als in Flussrichtung geschaltete Diode ausgeführt, da die darüber abfallende Spannung einen Maximalwert, etwa 0,7 V bei Siliziumtechnik, unabhängig vom Laststrom nicht überschreitet. Es können auch mehrere Dioden in Reihe geschaltet werden. Generell sind auch andere Bauelemente, beispielsweise ein Widerstand einsetzbar.

Die nicht schaltbaren Elemente des Spannungsteilers stellen vorzugsweise in Reihe geschaltete Widerstände dar. Das Verhältnis dieser Widerstandswerte spiegelt dann das Verhältnis der Messspannung zur Eingangsspannung wieder, solange das schaltbare Element nicht durchschaltet.

In einem ersten Ausführungsbeispiel weist die Kopplungsschaltung einen Operationsverstärker auf, welcher mit einem ersten Eingang mit der Kathode der Diode, mit einem zweiten Eingang über eine weitere Diode, welche gegenüber der Diode eine geringere Flussspannung aufweist, mit der Anode der Diode und mit dem Ausgang mit der Basis des Schalttransistors verbunden ist.

In einem zweiten Ausführungsbeispiel weist die Kopplungsschaltung mindestens zwei miteinander verbundene Transistoren auf, welche so mit der Anode, der Kathode der Diode und der Basis des Schalttransistors verbunden sind, dass ein Spannungsabfall über der Diode zu einem Sperren des Schalttransistors führt. Solange kein (oder nur ein sehr geringer) Laststrom fließt, fällt keine Spannung über der Diode ab. Der zum zweiten Widerstand des Spannungsteilers mit Kollektor und Emitter parallel geschaltete Schalttransistor leitet und bildet somit einen gegenüber dem ersten Widerstand des Spannungsteilers sehr geringen Widerstandswert (nahe null Ohm). Die Messspannung ist entsprechend gering. Überschreitet der Laststrom einen bestimmten Wert und fällt damit mindestens eine bestimmte Spannung über der Diode ab, so schaltet der Schalttransistor um in den gesperrten Zustand, und das Verhältnis der Eingangsspannung zur Meßspannung entspricht dem Verhältnis des zweiten Widerstands zur Widerstandskette aus erstem und zweiten Widerstand.

In einer vorteilhaften Weiterbildung wird eine Überwachungseinrichtung aus einer Schaltungsanordnung gemäß Anspruch 1 und einer Spannungsüberwachung gebildet. Der Spannungsüberwachung wird die Messspannung zugeführt. Diese Messspannung wird daraufhin überprüft, ob sie innerhalb vorbestimmter Grenzen liegt. So können beispielsweise ein oberer und ein unterer Spannungsüberprüfungs-Schwellwert vorgegeben werden. Solang die Messspannung sich zwischen diesen Schwellwerten befindet, wird die Versorgung der Last als korrekt angesehen, d. h. es fließt ein genügend hoher Strom und die Eingangsspannung liegt in einem erlaubten Bereich.

Vorzugsweise ist ein Schalter zwischen die Last und der Energieversorgung geschaltet, dessen Schalteingang an die Spannungsüberwachung gelegt ist. Sobald die Spannung außerhalb des erlaubten Bereichs liegt, erfolgt eine Trennung der Energieversorgung von der Last. Alternativ ist es auch möglich, den Schalter in eine Zuleitung zur Energieversorgung zu schalten, wenn diese Energieversorgung selber von einer weiteren Energieversorgung versorgt wird.

In einer weiteren Alternative ist es auch möglich, eine logische Abschaltung in einem zentralen Modul vorzunehmen, beispielsweise in einem zentralen Fahrzeugmodul einer Zugsteuerungseinrichtung, welches die Ergebnisse des überwachten Moduls, beispielsweise Weg- und Geschwindigkeitsdaten eines Weg- und Geschwindigkeitsmessmoduls verarbeitet, erfolgen zu lassen. Dazu erfolgt eine Signalisierung von der Überwachungseinrichtung zu dem zentralen Modul.

In Sicherheitssystemen, wie sie beispielsweise bei signaltechnischen Einrichtungen der Bahn eingesetzt werden, ist die Strom- und Spannungsüberwachung vorzugsweise so ausgestaltet, dass bis zu einem Neustart eine irreversible Trennung erfolgt.

Die Schaltungsanordnung, Überwachungseinrichtung und Lastschaltung können jeweils als einzelne Module realisiert werden oder teilweise oder alle zusammen in eine Einheit integriert werden.

Weitere vorteilhafte Ausgestaltungen der Erfindung sind den abhängigen Ansprüchen und der Beschreibung zu entnehmen.

Fig.1   zeigt ein Prinzipschaltbild mit einer erfindungsgemäßen Schaltungsanordnung zur kombinierten Spannungs- und Stromüberwachung einer Versorgung einer Last mit elektrischer Energie,

Fig.2   zeigt ein beispielhaftes Strom- Spannungsdiagramm mit einem erlaubten Bereich AR,

Fig.3   zeigt ein erstes Ausführungsbeispiel zu einer Schaltung nach Fig.1 und

Fig.4   zeigt ein zweites Ausführungsbeispiel zu einer Schaltung nach Fig.1.

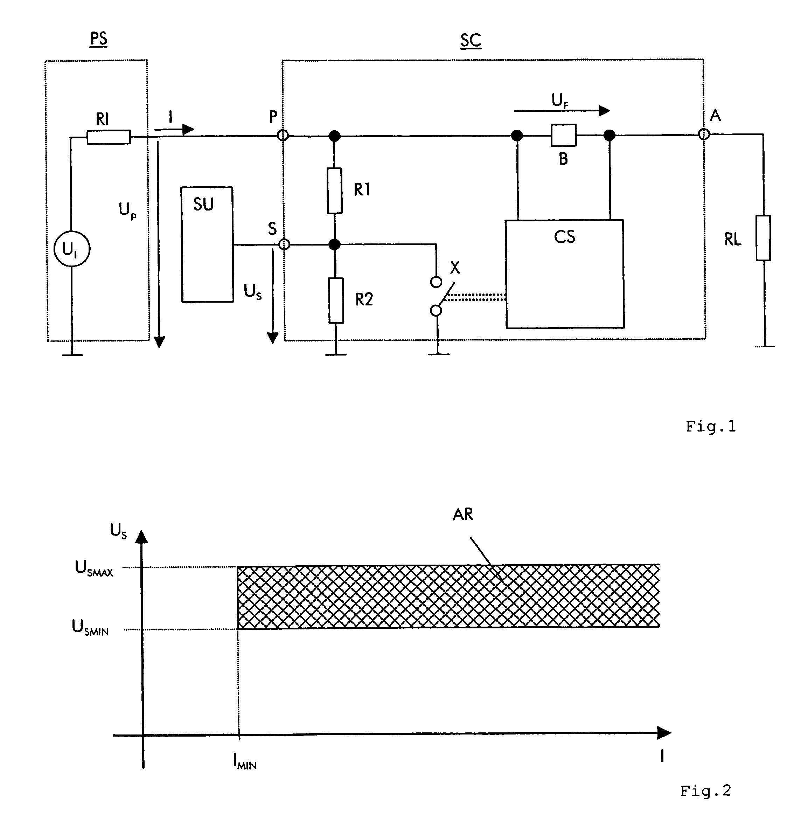

Fig.1 zeigt ein Prinzipschaltbild mit einer Energieversorgung PS, einer erfindungsgemäßen Schaltungsanordnung SC zur kombinierten Spannungs- und Stromüberwachung, eine Spannungsüberwachung SU und eine hier nicht näher betrachtete Last RL, welche als Lastwiderstand RL dargestellt ist. Die Energieversorgung PS ist durch eine ideale Spannungsquelle Ui und einen Innenwiderstand RI dargestellt. Ein Pol der idealen Spannungsquelle Ui ist dabei mit der Masse und ein anderer über den Innenwiderstand RI mit einem (Last-) Eingang P einer Schaltungsanordnung SC verbunden. Zwischen dem Eingang P und der Masse liegt eine Eingangsspannung $U_P$ an. Die Schaltungsanordnung weist einen Lastausgang A auf, der über die Last RL mit der Masse verbunden ist, und einen Überwachungs- oder Meßausgang S auf, der mit einer Spannungsüberwachung SU verbunden ist. Zwischen dem Meßausgang S und der Masse liegt eine Meßspannung $U_S$ an.

Der Eingang P ist mit dem Lastausgang A über ein Bauelement B verbunden. Vom Eingang P zweigt ein Spannungsteiler mit zwei in Reihe geschalteten Widerständen R1 und R2 zur Masse ab. Zwischen diesen Widerständen zweigt der Messausgang S ab. Parallel zu einem Widerstand des Spannungsteilers, hier zum zweiten Widerstand R2, zwischen dem Meßausgang P und der Masse befindet sich ein Schaltelement X, das von einem Stromschalter CS angesteuert wird. Der Stromschalter CS weist zwei Eingänge zum Abtasten der über dem Bauelement B abfallenden Bauelementspannung $U_F$ auf, welche je mit dem Eingang P und dem Lastausgang A verbunden sind.

Die Überwachung der Eingangsspannung $U_P$ erfolgt, wie aus dem Stand der Technik als bekannt unterstellt, mittels einer Spannungsüberwachung SU, welche ermittelt, ob die angelegte Spannung $U_P$ bestimmte Werte annimmt, beispielsweise wie unter Fig. 2 näher beschrieben, ob sich diese Spannung innerhalb eines vorbestimmten Bereichs befindet. Dazu wird die an die Spannungsüberwachung SU angelegte Meßspannung mittels des Spannungsteilers aus der angelegten Spannung $U_P$ gewonnen, hier proportional zum Verhältnis des zweiten Widerstands R2 zur Widerstandskette R1/R2.

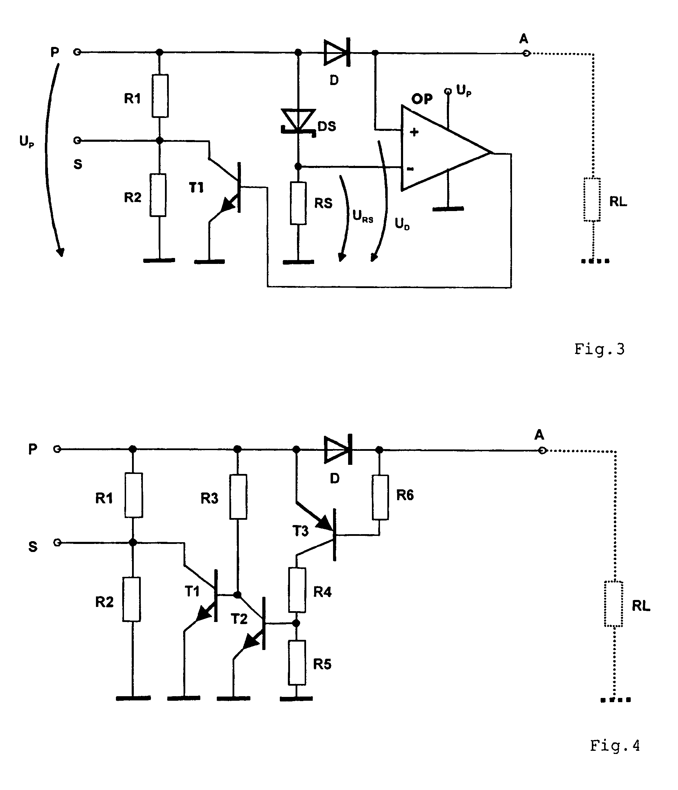

Erfindungsgemäß wird diese Schaltung, den Überwachungsausgang S am Spannungsteiler R1/R2 aufweisend, um einen Stromfühler CS erweitert. Dazu wird in den Strompfad von der Stromversorgung PS zum Verbraucher RL, d. h. zwischen den Eingang P und den Lastausgang A der Schaltungsanordnung, ein Bauelement B eingefügt. Das Bauelement B hat die Eigenschaft, dass bei Stromdurchfluss eine bestimmte Spannung $U_F$ abfällt. Dieser Spannungsabfall wird dem Stromfühler CS zugeführt, welcher, mit der Kenntnis der Eigenschaften des Bauelements (z. B. Strom-Spannungskennlinie), auf den Laststrom I zurück schließt. Der Stromfühler ist mit dem Steuereingang des Schaltelements X verbunden. Solange kein Laststrom I fließt oder der Laststrom gering ist, bleibt das Schaltelement X geschlossen. Nimmt der Laststrom I einen bestimmten Wert an, so wird der Schalter geöffnet. Der Schalter kann gemäß Fig. 1 als Relaiskontakt gedacht werden, der von einer Spule geschaltet wird, welche von einem vom Laststrom I abhängigen Spulenstrom durchflossen wird. Sobald dieser Strom einen bestimmten Wert erreicht, erfolgt ein Umschalten und damit ein Öffnen des Relaiskontakts. Der Relaiskontakt hat im idealen Fall einen Widerstand von 0 Ohm im geschlossenen Zustand. Die Meßspannung Us nimmt also dann den Wert 0 an, solange der Laststrom unterhalb des bestimmten Werts liegt und springt auf den Wert $U_P * R2/(R1 +R2)$, sobald der Laststrom I diesen Wert überschreitet. In den folgenden Fig. 3 und Fig. 4 werden Ausführungsbeispiele für Realisierungen mit elektronischen Bauelementen für das Bauelement B, den Stromfühler CS und das Schaltelement X beschrieben. Bei diesen Beispielen weist das Schaltelement X auch im geschlossenen Zustand einen geringen Widerstand auf.

Der oben beschriebene Spannungsteiler kann auch aus einer Widerstandskette mit mehr als zwei Widerständen zusammengesetzt sein und der Abgriff der Meßspannung kann zwischen beliebigen Widerständen dieser Widerstandskette erfolgen. Das Schaltelement X kann parallel zu einem oder mehreren dieser Widerstände liegen. Die Widerstände können Werte zwischen 0 Ohm und unendlich annehmen.

Fig. 2 zeigt ein beispielhaftes Strom- Spannungsdiagramm mit einem erlaubten Bereich AR. Auf der Abszisse ist der Laststrom I und auf der Ordinate die Meßspannung $U_S$ aufgetragen. Die erlaubte Fläche wird von drei Seiten begrenzt: einem minimalen Strom $I_{min}$, einer minimalen Meßspannung $U_{Smin}$ und einer maximalen Meßspannung $U_{Smax}$.

Fig. 2 zeigt beispielhaft, wie sich die gemeinsame Strom- und Spannungsüberwachung auf die Spannung am Überwachungsausgang S auswirken. Wenn der Strom unter die Schwelle von $I_{min}$ sinkt, wird eine Spannung unterhalb von $U_{Smin}$ am Ausgang S detektiert. Oberhalb dieses Stroms findet dann eine aus dem Stand der Technik bekannte Überwachung der Spannung mit einer minimalen Schwelle $U_{Smin}$ und einer maximalen Schwelle $U_{Smax}$ statt.

In einer Weiterbildung der Erfindung wird auch eine Überwachung auf einen maximalen Strom durchgeführt, um beispielsweise Kurzschlüsse zu detektieren. Dabei findet dann ein erneutes Schließen des Schalters bei einem Strom oberhalb des maximal erlaubten Stromes statt.

Fig. 3 zeigt ein erstes Ausführungsbeispiel zu einer Schaltung nach Fig. 1. Dazu ist in Fig. 3 das Bauelement B als Diode D ausgeführt. Der Stromfühler CS ist durch einen Schaltung mit einer Schottky-Diode DS, einem Operationsverstärker OP ausgeführt. Der Schaltkontakt X ist als (NPN-) Transistor, im folgenden als Schalttransistor T1 bezeichnet, realisiert.

Die Schottky-Diode DS ist mit ihrer Anode mit der Anode der Diode D und mit ihrer Kathode mit dem negativen Eingang des Operationsverstärkers OP und einem Widerstand RS verbunden, der an die Masse angeschlossen ist. Der positive Eingang des Operationsverstärkers OP ist mit der Kathode der Diode D verbunden. Der Ausgang des Operationsverstärkers OP ist mit der Basis des Schalttransistors T1 verbunden. Der Kollektor dieses Transistors ist mit dem Meßausgang S und der Emitter mit der Masse verbunden. Der Operationsverstärker OP wird durch die Energieversorgung mit der Spannung $U_P$ gespeist. Zwischen dem positiven Eingang des Operationsverstärkers OP und der Masse fällt eine Spannung $U_D$ und zwischen dem negativen Eingang des Operationsverstärkers OP und der Masse fällt eine Spannung $U_{RS}$ ab.

Die Schottky-Diode DS hat eine geringere Fluss-Spannung als die Diode D. Im Betriebsfall fällt deshalb an der Schottky-Diode DS eine geringere Spannung ab, als an der Diode D. Damit gilt:

$$U_{RS} > U_D ;$$

der Schalttransistor T1 sperrt. Am Ausgang S liegt eine der Versorgungsspannung $U_P$ proportionale Spannung an, der Laststrom I hat keine Rückwirkung auf die Spannungsprüfung in der Spannungsüberwachung SU oder, anders ausgesagt, das Ergebnis der Stromprüfung ist positiv.

In einem angenommenen Fehlerfall ist der Laststromkreis unterbrochen; es findet kein Stromfluss über die Last RL statt. Es gilt:

$$U_{RS} \leq U_D ;$$

der Schalttransistor T1 wird leitend. Am Ausgang S liegt eine Meßpannung $U_P$ unterhalb der minimal voreingestellten Schwelle $U_{Smin}$ an. Die Spannungsprüfung in der Spannungsüberwachung SU verläuft, ungeachtet dessen, ob die Versorgungsspannung innerhalb der tolerierten Grenzen liegt, negativ.

Fig. 4 zeigt ein zweites Ausführungsbeispiel zu einer Schaltung nach Fig. 2. Analog zu Fig. 3 ist das Bauelement B als Diode D und das schaltbare Element X als Schalttransistor T1 ausgeführt. Der Stromfühler CS ist als Schaltung bestehend aus zwei weiteren Transistoren T2 und T3 und vier Widerständen R3 - R6.

Der dritte Widerstand R3 verbindet den Eingang P mit der Basis des Schalttransistors T1, welche weiter mit dem Kollektor des zweiten (NPN-) Transistors T2 verbunden ist. Der Emitter des zweiten Transistors T2 ist auf Masse gelegt. Der Emitter des dritten (PNP-) Transistors ist mit der Anode der Diode D, die Basis ist über den sechsten Widerstand R6 mit der Kathode der Diode und der Kollektor ist über die in Serie geschalteten (vierten und fünften) Widerstände R4 und R5 mit der Masse verbunden. Der Punkt zwischen dem vierten und fünften Widerstand R4 und R5 ist mit der Basis des zweiten Transistors T2 verbunden.

Im Betriebsfall ist der dritte Transistor T3 leitend. Durch den Spannungsabfall über den fünften Widerstand R5 ist der zweite Transistor T2 ebenfalls leitend; damit ist der Schalttransistor T1 gesperrt. Am Messausgang S liegt eine der Versorgungsspannung $U_P$ proportionale Spannung an. Falls die Versorgungsspannung innerhalb der vorbestimmten Grenzen liegt, liegt die Messspannung innerhalb des erlaubten Bereichs AR; die Energieversorgung der Last RL wird als fehlerfrei erkannt.

Im Fehlerfall, d. h. kein Stromfluss über RL, sperrt der dritte Transistor T3 und damit auch der zweite Transistor T2. Der Schalttransistor T1 wird leitend. Am Ausgang S liegt eine Meßpannung nahe 0 und damit unterhalb der minimal voreingestellten Schwelle $U_{Smin}$ an. Die Energieversorgung gilt damit als fehlerhaft oder gestört.

**Patentansprüche**

1. Schaltungsanordnung (SC) zur Überprüfung der Versorgung einer elektrischen Last (RL) mit einem Eingang (P) zum Anschließen an eine elektrische Energieversorgung (PS) und einem Spannungsteiler sowie einem Stromfühler (D,CS) zur Ermittlung eines Laststroms (I), wobei der Spannungsteiler ein als Schalttransistor (T1) ausgebildetes schaltbares Element (X) enthält und dieses schaltbare Element (X) so mit dem Stromfühler gekoppelt ist, dass bei einem bestimmten Laststromwert (IMIN) ein Umschalten des schaltbaren Elements (X) erfolgt, **dadurch gekennzeichnet, dass** der Spannungsteiler einen Messausgang (S) zur Ansteuerung einer Spannungsüberwachung (SU) aufweist, an dem sich eine Spannungsänderung ergibt, wenn bei dem bestimmten Laststromwert (IMIN) ein Umschalten des schaltbaren Elements (X) erfolgt, wobei der Stromfühler eine in den Laststromkreis geschaltete Diode (D) und eine Kopplungsschaltung (OP, DS, RS) zur Kopplung der über der Diode (D) abfallenden Spannung mit der Basis des Schalttransistors (R1) aufweist.

2. Schaltungsanordnung (SC) nach Anspruch 1, wobei die nicht schaltbaren Elemente des Spannungsteilers in Reihe geschaltete Widerstände (R1, R2) darstellen.

3. Schaltungsanordnung (SC) nach Anspruch 1, wobei die Kopplungsschaltung einen Operationsverstärker (OP) aufweist, welcher

   - mit einem ersten Eingang mit der Kathode der Diode (D),
   - mit einem zweiten Eingang über eine weitere Diode (DS), welche gegenüber der Diode (D) eine geringere Flussspannung aufweist, mit der Anode der Diode (D) und
   - mit dem Ausgang mit der Basis des Schalttransistors (T1) verbunden ist.

4. Schaltungsanordnung (SC) nach Anspruch 1, wobei die Kopplungsschaltung mindestens zwei miteinander verbundene Transistoren (T2, T3) aufweist, welche so mit der Anode, der Kathode der Diode (D) und der Basis des Schalttransistors (T1) verbunden sind, dass ein Spannungsabfall über der Diode (D) zu einem Sperren des Schalttransistors (T1) führt.

5. Überwachungseinrichtung mit einer Schaltungsanordnung (SC) mit einem Eingang (P) zum Anschließen an eine elektrische Energieversorgung (PS) und einem Spannungsteiler sowie einem Stromfühler (D, CS) zur Ermittlung eines Laststroms (I), wobei der Spannungsteiler ein als Schaltransistor ausgebildetes schaltbares Element (X) enthält und dieses schaltbare Element (X) so mit dem Stromfühler gekoppelt ist, dass bei einem bestimmten Laststromwert (IMIN) ein Umschalten des schaltbaren Elements (X) erfolgt, **dadurch gekennzeichnet, dass** der Spannungsteiler einen Messausgang (S) aufweist, an dem sich eine Spannungsänderung ergibt, wenn bei dem bestimmten Laststromwert (IMIN) ein Umschalten des schaltbaren Elements erfolgt, und der Messausgang (S) mit einer Spannungsüberwachung (SU) verbunden ist, welche so ausgestaltet sind, dass die Spannung des Messausgangs (P) darauf überprüft wird, ob sie innerhalb vorbestimmter Grenzen liegt.

6. Überwachungseinrichtung nach Anspruch 5, mit einem ansteuerbaren Schalter zwischen der Last (RL) und der Energieversorgung (PS), dessen Ansteuerung mit der Spannungsüberwachung (SU) so gekoppelt ist, dass eine Trennung der Energieversorgung (PS) von der Last (RL) erfolgt, falls die Spannung des Messausgangs (P) außerhalb der vorbestimmten Grenzen liegt.

7. Überwachungseinrichtung nach Anspruch 5, wobei Ansteuerung so ausgeschaltet ist, dass eine bis zu einem Neustart irreversible Trennung erfolgt.

8. Elektrische Energieversorgung (PS) mit einer integrierten Schaltungsanordnung (SC) nach Anspruch 1.

9. Verfahren zur Überprüfung der Versorgung einer elektrischen Last (RL) mit elektrischer Energie einer Energieversorgung (PS), wobei in einer Schaltungsanordnung gemäß Anspruch 1 eine Messspannung (Us) über einem an die Energieversorgung (PS) angeschlossenen Spannungsteiler (R1,R2) abgegriffen wird, der Spannungsteiler ein schaltbares Element (X) enthält, der über eine Last (RL) fließende Laststrom (I) abgegriffen wird, und der Laststrom mit dem Schalter in Wirkkontakt steht, so dass bei einem bestimmten Laststromwert (I) ein Umschalten des Schalters und damit eine Änderung der Messspannung (Us) erfolgt, **dadurch gekennzeichnet, dass** die Messspannung einer Spannungsüberwachung (SU) zugeführt wird und eine Überwachung der Messspannung mit einer minimalen Schwelle (Usmin) und einer maximalen Schwelle (Usmax) erfolgt.

**Claims**

1. Circuit arrangement (SC) for checking the power supply to an electric load (RL), comprising an input (P), for connecting to an electric power supply (PS), and a voltage divider, as well as a current sensor (D, CS) for the determination of a load current (I), the voltage divider including a switchable element (X) realized as a switching transistor (T1), and this switchable element (X) being coupled to the current sensor in such a way that, upon a certain load-current value (IMIN), a switchover of the switchable element (X) is effected, **characterized in that** the voltage divider has a measuring output (S), for controlling a voltage monitor (SU), at which measuring output (S) a voltage variation results when, upon the certain load-current value (IMIN), a switchover of the switchable element (X) is effected, the current sensor having a diode (D), connected into the load-current circuit, and a coupling circuit (OP, DS, RS) for coupling the voltage dropping across the diode (D) to the base of the switching transistor (R1).

2. Circuit arrangement (SC) according to Claim 1, the non-switchable elements of the voltage divider being series-connected resistors (R1, R2).

3. Circuit arrangement (SC) according to Claim 1, the coupling circuit have an operational amplifier (OP), which is connected

   - through a first input, to the cathode of the diode (D),
   - through a second input, to the anode of the diode (D), via a further diode (DS) having a lesser forward voltage than the diode (D), and
   - through the output, to the base of the switching transistor (T1).

4. Circuit arrangement (SC) according to claim 1, the coupling circuit having at least two interconnected transistors (T2, T3) which are connected to the anode and cathode of the diode (D) and to the base of the switching transistor (T1) in such a way that a voltage drop across the diode (D) results in the switching transistor (T1) being rendered non-conductive.

5. Monitoring device comprising a circuit arrangement (SC) having an input (P) for connecting to an electric power supply (PS), and a voltage divider, as well as a current sensor (D, CS) for the determination of a load current (I), the voltage divider including a switchable element (X) realized as a switching transistor, and this switchable element (X) being coupled to the current sensor in such a way that, upon a certain load-current value (IMIN), a switchover of the switchable element (X) is effected, **characterized in that** the voltage divider has a measuring output (S) at which a voltage variation results when, upon the certain load-current value (IMIN), a switchover of the switchable element is effected, and the measuring output (S) is connected to a voltage monitor (SU) which is of such design that the voltage of the measuring output (P) is checked to determine whether it lies within predetermined limits.

6. Monitoring device according to Claim 5, comprising a controllable switch between the load (RL) and the power supply (PS), the control of which switch is coupled to the voltage monitor (SU) in such a way that the power supply (PS) is disconnected from the load (RL) if the voltage of the measuring output (P) lies outside the predetermined limits.

7. Monitoring device according to Claim 5, control being switched off in such a way that irreversible disconnection is effected until restarting is performed.

8. Electric power supply (PS) comprising an integrated circuit arrangement (SC) according to Claim 1.

9. Method for checking the supply of electric power to an electric load (RL) from a power supply (PS), wherein, in a circuit arrangement according to Claim 1, a measuring voltage ($U_S$) is tapped across a voltage divider (R1, R2) connected to the power supply (PS), the voltage divider includes a switchable element (X), the load current (I) flowing across a load (RL) is tapped, and the load current is in active contact with the switch so that, upon a certain load-current value (I), a switchover of the switch and, consequently, a variation of the measuring voltage ($U_S$) is effected, **characterized in that** the measuring voltage is supplied to a voltage monitor (SU) and the measuring voltage is monitored using a minimum threshold ($U_{Smin}$) and a maximum threshold ($U_{Smax}$).

**Revendications**

1. Arrangement de circuit (SC) pour contrôler l'alimentation d'une charge électrique (RL) comprenant une entrée (P) destinée à être raccordée à une alimentation en énergie électrique (PS) et un diviseur de tension ainsi qu'un capteur de courant (D, CS) destiné à déterminer un courant de charge (1), le diviseur de tension contenant un élément commutable (X) réalisé sous la forme d'un transistor de commutation (T1) et cet élément commutable (X) étant relié au capteur de courant de telle sorte qu'une valeur donnée du courant de charge (IMIN) provoque un basculement de l'élément de commutation (X), **caractérisé en ce que** le diviseur de tension présente une sortie de mesure (S) destinée à commander un dispositif de surveillance de la tension (SU) sur laquelle il se produit une modification de la tension lorsque, à la valeur donnée du courant de charge (IMIN), il se produit un basculement de l'élément commutable (X), le capteur de courant présentant une diode (D) branchée dans le circuit du courant de charge et un circuit de couplage (OP, DS, RS) pour connecter la tension de chute aux bornes de la diode (D) à la base du transistor de commutation (R1).

2. Arrangement de circuit (SC) selon la revendication 1, les éléments non commutables du diviseur de tension représentant des résistances (R1, R2) branchées en série.

3. Arrangement de circuit (SC) selon la revendication 1, le circuit de couplage présentant un amplificateur opérationnel (OP) qui est relié avec

   - une première entrée à la cathode de la diode (D),
   - une deuxième entrée à l'anode de la diode (D) par le biais d'une autre diode (DS) qui présente une tension de seuil inférieure à celle de la diode (D) et
   - la sortie à la base du transistor de commutation (T1).

4. Arrangement de circuit (SC) selon la revendication 1, le circuit de couplage présentant au moins deux transistors (T2, T3) reliés ensemble, lesquels sont reliés à l'anode, à la cathode de la diode (D) et à la base du transistor de commutation (T1) de telle sorte qu'une chute de tension aux bornes de la diode (D) provoque un blocage du transistor de commutation (T1).

5. Dispositif de surveillance comprenant un arrangement de circuit (SC) comprenant une entrée (P) destinée à être raccordée à une alimentation en énergie électrique (PS) et un diviseur de tension ainsi qu'un capteur de courant (D, CS) destiné à déterminer un courant de charge (I), le diviseur de tension contenant un élément commutable (X) réalisé sous la forme d'un transistor de commutation et cet élément commutable (X) étant relié au capteur de courant de telle sorte qu'une valeur donnée du courant de charge (IMIN) provoque un basculement de l'élément de commutation (X), **caractérisé en ce que** le diviseur de tension présente une sortie de mesure (S) sur laquelle il se produit une modification de la tension lorsque, à la valeur donnée du courant de charge (IMIN), il se produit un basculement de l'élément commutable, et la sortie de mesure (S) est reliée à un dispositif de surveillance de la tension (SU) qui est configuré de telle sorte que la tension de la sortie de mesure (P) est soumise à un contrôle pour vérifier si elle se trouve dans des limites prédéfinies.

6. Dispositif de surveillance selon la revendication 5, comprenant un commutateur commandable entre la charge (RL) et l'alimentation en énergie (PS) dont la commande est couplée avec le dispositif de surveillance de la tension (SU) de manière à ce qu'il se produise un déconnexion de l'alimentation en énergie (PS) de la charge (RL) si la tension de la sortie de mesure (P) est en dehors de limites prédéfinies.

7. Dispositif de surveillance selon la revendication 5, la commande étant commutée de manière à produire une déconnexion irréversible jusqu'à un redémarrage.

8. Alimentation en énergie électrique (PS) intégrant un arrangement de circuit (SC) selon la revendication 1.

9. Procédé de contrôle de l'aliroentation d'une charge électrique (RL) avec l'énergie électrique d'une alimentation en énergie (PS), une tension mesurée (Us) étant prélevée dans un arrangement de circuit selon la revendication 1 par le biais d'un diviseur de tension (R1, R2) raccordé à l'alimentation en énergie (PS), le diviseur de tension contenant un élément commutable (X), le courant de charge (I) qui circule à travers une charge (RL) étant prélevé et le courant de charge étant en contact actif avec le commutateur de telle sorte qu'une valeur donnée du courant de charge (I) provoque un basculement du commutateur et ainsi une modification de la tension mesurée (Us), **caractérisé en ce que** la tension mesurée est acheminée à un dispositif de surveillance de la tension (SU) et il se produit une surveillance de la tension mesurée avec un seuil minimum (Usmin) et un seuil maximum (Usmax).

Fig.1

Fig.2

Fig.3

Fig.4